# EUROPEAN PATENT SPECIFICATION

(11) **EP 2 818 708 B1**
(45) Date of publication and mention of the grant of the patent: **20.07.2016**
(21) Application number: 14168915.8
(22) Date of filing: 20.05.2014
(51) Int. Cl.: F04B 35/04, F04B 39/00, F04B 39/12

(54) **Linear compressor**
Linearer Verdichter
Compresseur linéaire

(30) Priority: 28.06.2013 KR 20130075514
(43) Date of publication of application: 31.12.2014
(73) Proprietor: LG Electronics Inc., Seoul 150-721 (KR)
(72) Inventor: Kang, Kyoungseok, 153-802 Seoul (KR); Jung, Wonhyun, 153-802 Seoul (KR); Roh, Chulgi, 153-802 Seoul (KR)
(74) Representative: Vossius & Partner Patentanwälte Rechtsanwälte mbB

(56) References cited:
- KR-A- 20100 010 421
- US-A1- 2005 098 031
- US-A1- 2008 000 348
- US-A1- 2009 101 003
- US-A1- 2013 004 343

## Description

### BACKGROUND

The present disclosure relates to a linear compressor.

In general, compressors may be mechanisms that receive power from power generation devices such as electric motors or turbines to compress air, refrigerants, or other working gases, thereby increasing a pressure of the working gas. Compressors are being widely used in home appliances or industrial machineries such as refrigerators and air-conditioners.

Compressors may be largely classified into reciprocating compressors in which a compression space for suctioning or discharging a working gas is defined between a piston and a cylinder to compress a refrigerant while the piston is linearly reciprocated within the cylinder, rotary compressors in which a compression space for suctioning or discharging a working gas is defined between a roller that is eccentrically rotated and a cylinder to compress a refrigerant while the roller is eccentrically rotated along an inner wall of the cylinder, and scroll compressors in which a compression space for suctioning or discharging is defined between an orbiting scroll and a fixed scroll to compress a refrigerant while the orbiting scroll is rotated along the fixed scroll.

In recent years, among the reciprocating compressors, linear compressors having a simple structure in which the piston is directly connected to a driving motor, which is linearly reciprocated, to improve compression efficiency without mechanical loss due to switching in moving are being actively developed.

Generally, such a linear compressor is configured to suction and compress a refrigerant while a piston is linearly reciprocated within a cylinder by a linear motor in a sealed shell, thereby discharging the compressed refrigerant.

The linear motor has a structure in which a permanent magnet is disposed between an inner stator and an outer stator. Here, the permanent magnet may be linearly reciprocated by a mutual electromagnetic force between the permanent magnet and the inner (or outer) stator. Also, since the permanent magnet is operated in a state where the permanent magnet is connected to the piston, the refrigerant may be suctioned and compressed while the piston is linearly reciprocated within the cylinder and then be discharged.

The linear compressor according to the related art is disclosed in Korean Patent Publication No. 10-2010-0010421, proposed by this applicant.

According to the related art, while the piston repeatedly moves within the cylinder, an interference between the cylinder and the piston may occur to cause abrasion of the cylinder or piston.

Particularly, when a predetermined pressure (a coupling pressure) may acts on the piston while the piston is coupled to a peripheral constitution to cause deformation of the piston due to the pressure, the interference between the cylinder and the piston may seriously occur.

Also, if a slight error occurs while the piston is assembled with the cylinder, a compression gas may leak to the outside, and thus, the abrasion between the cylinder and the piston may more seriously occur.

As described above, the interference between the cylinder and the piston may occur to cause an interference between the permanent magnet and the inner and outer stators, thereby damaging components.

Also, in case of the linear compressor according to the related art, each of the cylinder or the piston may be formed of a magnetic material. Thus, a large amount of flux generated in the linear motor may leak to the outside through the cylinder and piston to deteriorate efficiency in the compressor.

### SUMMARY

Embodiments provide a linear compressor which prevents abrasion or damage of internal components thereof.

In one embodiment, a linear compressor includes a shell including a refrigerant inlet, an outer stator provided in the shell and including a coil, an inner stator disposed to be spaced apart from the outer stator, a permanent magnet disposed to be movable between the outer stator and the inner stator, a cylinder including a compression space in which a refrigerant sucked through refrigerant inlet is compressed, a piston coupled to the permanent magnet so as to be reciprocated in the cylinder, a first surface treatment part provided at the piston so as to have a first hardness value, and a second surface treatment part provide at the cylinder so as to have a second hardness value so that a difference value between the first and second hardness values is 150Hv or more based on Vickers hardness.

The preset value may be decided so that an abrasion amount generated at the piston or the cylinder, while the piston is repeatedly reciprocated for a predetermined period of time, is 3 µm or less.

The first surface treatment part or the second treatment part may be made of one of polytetra fluoroethylene (PTFE), diamond like carbon (DLC), an Ni-P alloy and an anodizing layer.

The first surface treatment part may be made one of the PTFE, the DLC, the Ni-P alloy and the anodizing layer, and the second treatment part may be made of another one of the PTFE, the DLC, the Ni-P alloy and the anodizing layer, which is different from the first surface treatment part.

The first surface treatment part may be made of the PTFE, and the second surface treatment part is made of the anodizing layer.

The piston and the cylinder may be made of a non-magnetic material.

The piston and the cylinder may be made of aluminum or an aluminum alloy.

The aluminum or the aluminum alloy of the piston and the cylinder may be the same material.

The first surface treatment part may be provided on an outer circumferential surface of the piston, and the second surface treatment part may be provided on an inner circumferential surface of the cylinder, which is opposite to the outer circumferential surface of the piston.

The piston may include a piston body received in the cylinder, and a flange part expanded in a radial direction of the piston body and coupled to the permanent magnet, and the first surface treatment part may be provided on an outer circumferential surface of the piston body.

In another embodiment, a linear compressor comprising a piston which is reciprocated in a cylinder by a force generated by an interaction between a flux generated by a current applied to a coil and a flux of a permanent magnet includes a first surface treatment part provided on an outer circumferential surface of the piston, and a second surface treatment part provided on an inner circumferential surface of the cylinder, wherein a hardness value measured at the first surface treatment part and a hardness value measured at the second surface treatment part makes a preset hardness difference.

In further another embodiment, a linear compressor includes a shell comprising a refrigerant inlet, an outer stator provided in the shell and comprising a coil, an inner stator disposed to be spaced apart from the outer stator, a permanent magnet disposed to be movable between the outer stator and the inner stator, a cylinder comprising a compression space in which a refrigerant sucked through refrigerant inlet is compressed, a piston coupled to the permanent magnet so as to be reciprocated in the cylinder, a polytera fluroethylene (PTFE) coating layer which is surface-treated on an outer circumferential surface of the piston, and an anodizing layer which is surface-treated on an inner circumferential surface of the cylinder.

The details of one or more embodiments are set forth in the accompanying drawings and the description below. Other features will be apparent from the description and drawings, and from the claims.

### BRIEF DESCRIPTION OF THE DRAWINGS

Fig. 1 is a cross-sectional view illustrating an internal configuration of a linear compressor in accordance with an embodiment.
Fig. 2 is a cross-sectional view illustrating a coupling state between a cylinder and a piston according to an embodiment.
Fig. 3 is a cross-sectional view illustrating a state in which the piston is moved in one direction in Fig. 2.
Fig. 4 is a cross-sectional view illustrating a state in which the piston and the cylinder are coupled with each other according to an embodiment.
Fig. 5 is a graph illustrating a change in an abrasion ratio of the cylinder or the piston according to a difference in hardness between first and second surface treatment parts according to an embodiment.

### DETAILED DESCRIPTION OF THE EMBODIMENTS

Specific embodiments will be described in detail with reference to the accompanying drawings. The invention may, however, be embodied in many different forms and should not be construed as being limited to the embodiments set forth herein; rather, that alternate embodiments included in other retrogressive inventions or falling within the scope of the present disclosure can easily be derived through adding, altering, and changing, and will fully convey the concept of the invention to those skilled in the art.

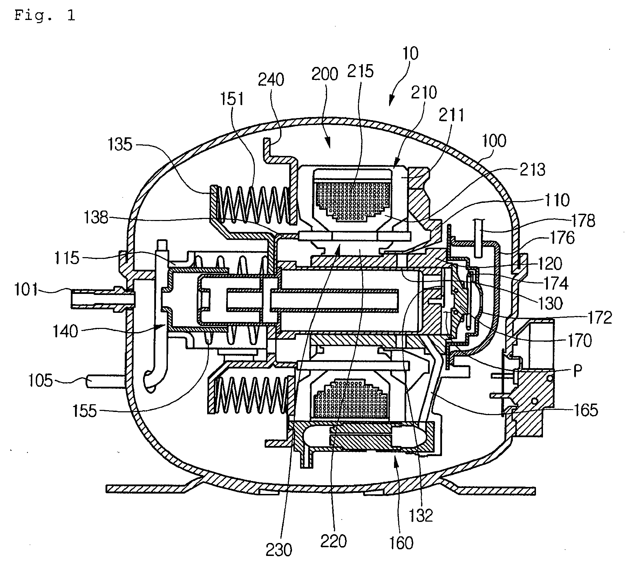

Fig. 1 is a cross-sectional view illustrating an internal configuration of a linear compressor in accordance with an embodiment.

Referring to Fig. 1, a linear compressor 10 according to an embodiment includes a cylinder 120 which is provided in a shell 100, a piston 130 which linearly reciprocates in the cylinder 120, and a motor assembly 200 which provides a driving force to the piston 130. The shell 100 may be configured by coupling an upper shell and a lower shell.

The shell 110 include an inlet 101 to which a refrigerant is introduced, and an outlet 105 to which the refrigerant compressed in the cylinder 120 is discharged. The refrigerant sucked through the inlet 101 flows into the piston 130 through a suction muffler 140. While the refrigerant passes through the suction muffler 140, a noise may be reduced.

A compression space P in which the refrigerant is compressed by the piston 130 is provided in the cylinder 120. An suction hole 131a through which the refrigerant is introduced to the compression space P is provided at the piston 130, and an suction valve 132 is provided at one side of the suction hole 131a so as to selectively open the suction hole 131a.

A discharge valve assembly 170, 172, 174 is provided at one side of the compression space P so as to discharge the refrigerant compressed in the compression space P. That is, the compression space P is defined between an end of the piston 130 and the discharge valve assembly 170, 172, 174.

The discharge valve assembly 170, 172, 174 includes a discharge cover 172 which defines a discharge space of the refrigerant, a discharge valve 170 which is opened so that the refrigerant is introduced into the discharge space, when a pressure of the compression space P is more than a discharge pressure, and a valve spring 174 which is provided between the discharge valve 170 and the discharge cover 172 so as to provide an elastic force in an axial direction. Here, the "axial direction" is a reciprocating direction of the piston 130, i.e., a transverse direction in Fig. 1.

The suction valve 132 may be provided at one side of the compression space P, and the discharge valve 170 may be provided at the other side of the compression space P, i.e., an opposite side to the suction valve 132.

While the piston 130 is reciprocated in the cylinder 120, if the pressure of the compression space P is lower than the discharge pressure and also less than a suction pressure, the suction valve 132 is opened, and the refrigerant is suctioned into the compression space P. On the other hand, if the pressure of the compression space P is more than the suction pressure, the suction valve 132 is closed and the refrigerant in the compression space P is compressed.

Meanwhile, if the pressure of the compression space P is more than the discharge pressure, the valve spring 174 is deformed so as to open the discharge valve 170, and the refrigerant is discharged from the compression space P to the discharge space of the discharge cover 172.

And the refrigerant in the discharge space is introduced into a loop pipe 178 through a discharge muffler 176. The discharge muffler 176 may reduce a flowing noise of the compressed refrigerant, and the loop pipe 178 guides the compressed refrigerant to the outlet 105. The loop pipe 178 is coupled to the discharge muffler 176, extended to be curved and then coupled to the outlet 105.

The linear compressor 10 further comprises a frame 110. The frame 110 serves to fix the cylinder 200. The frame 110 may be integrally provided with the cylinder 200 or may be fastened by a separated fastening member. The discharge cover 172 and the discharge muffler 176 may be coupled to the frame 110.

The motor assembly 200 includes an outer stator 210 which is fixed to the frame 110 and disposed to enclose the cylinder 120, an inner stator 220 which is disposed inside the outer stator 210 to be spaced apart from the outer stator 210, and a permanent magnet 230 which is disposed at a space between the outer and inner stators 210 and 220.

The permanent magnet 230 may be linearly reciprocated by an electromagnetic force between the outer and inner stators 210 and 220. And the permanent magnet 230 may be configured by a single magnet having one pole or may be configured by coupling a plurality of magnets having three poles. Specifically, in case of the magnet having three poles, one surface thereof has a polar distribution of an N-S-N type, and the other surface thereof has a polar distribution of an S-N-S type.

The permanent magnet 230 may be coupled to the piston 130 by a connection member 138. The connection member 138 may be extended from one end of the piston 130 to the permanent magnet 130. As the permanent magnet 230 is linearly moved, the piston 130 may be linearly reciprocated together with the permanent magnet 230 in the axial direction.

The outer stator 210 includes a coil body 213, 215 and a stator core 211.

The coil body 213, 215 includes a bobbin 213 and a coil 215 which is wound in a circumferential direction of the bobbin 213. The coil 215 may have a polygonal shape, e.g., a hexagonal shape.

The stator core 211 is configured by stacking a plurality of laminations in the circumferential direction, and may be disposed so as to enclose the coil body 213, 215.

If a current is applied to the motor assembly 200, the current flows through the coil 214, and a flux is generated around the coil 215. The flux forms a closed circuit and flows along the outer and inner stators 210 and 220.

The flux flowing along the outer and inner stators 210 and 220 interacts with a flux of the permanent magnet 230, and thus a force moving the permanent magnet 230 may be generated.

A stator cover 240 is provided at one side of the outer stator 210. One side end of the outer stator 210 may be supported by the frame 110, and the other side end thereof may be supported by the stator cover 240.

The inner stator 220 is fixed to an outer circumference of the cylinder 120. The inner stator 220 is configured by stacking the plurality of laminations in the circumferential direction at an outside of the cylinder 120.

The linear compressor 10 further includes a supporter 135 which supports the piston 130 and a back cover 115 which is extended from the piston 130 toward the inlet 101. The back cover 115 may be disposed so as to cover at least a part of the suction muffler 140.

The linear compressor 10 includes a plurality of springs 151 and 155 of which each natural frequency is controlled so as to enable a resonant motion of the piston 130.

The plurality of springs 151 and 155 include a first spring 151 which is disposed between the supporter 135 and the stator cover 240, and a second spring 155 which is disposed between the supporter 135 and the back cover 115.

The plurality of first springs 151 may be provided at both sides of the cylinder 120 or the piston 130, and the plurality of second springs 155 may be provided at a front side of the cylinder 120 or the piston 130.

Here, the "front side" is a direction from the piston 130 toward the inlet 101. That is, a "rear side" may be a direction from the inlet 101 toward the discharge valve assembly 170, 172, 174. These terms may also be equally used in the below description.

Predetermined oil may be stored at an internal bottom surface of the shell 100, and an oil supplying device 160 may be provided at a lower side of the shell 100 so as to pump the oil. The oil supplying device 160 is operated by vibration generated when the piston 130 is linearly reciprocated, so as to pump the oil upwardly.

The linear compressor 10 further includes an oil supplying tube 165 which guides an oil flow from the oil supplying device 160. The oil supplying tube 165 may be extended from the oil supplying device 160 to a space between the cylinder 120 and the piston 130.

The oil pumped from the oil supplying device 160 is supplied to the space between the cylinder 120 and the piston through the oil supplying tube 165, and performs cooling and lubricating functions.

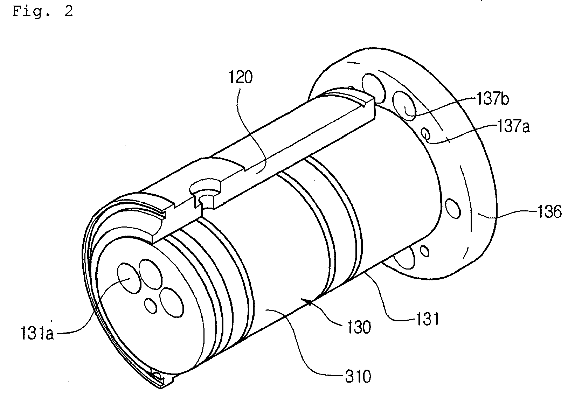

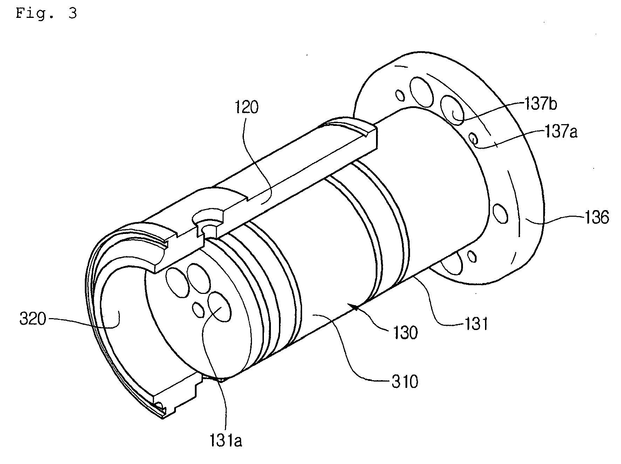

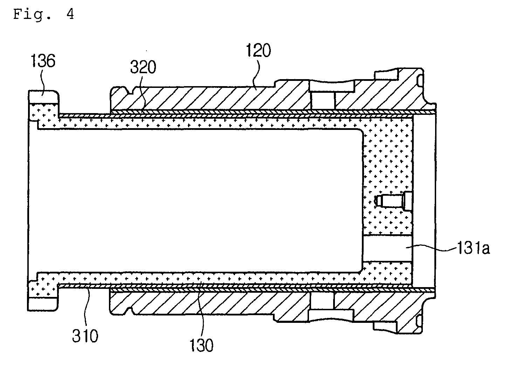

Fig. 2 is a cross-sectional view illustrating a coupling state between the cylinder and the piston according to an embodiment, Fig. 3 is a cross-sectional view illustrating a state in which the piston is moved in one direction in Fig. 2, and Fig. 4 is a cross-sectional view illustrating a state in which the piston and the cylinder are coupled with each other according to an embodiment.

Referring to Figs. 2 to 4, the piston 130 according to the embodiment is provided in the cylinder 120 to be reciprocated.

The piston 130 may be made of an aluminum material (aluminum or an aluminum alloy) which is a non-magnetic material. Since the piston 130 is made of the aluminum material, the flux generated at the motor assembly 200 is prevented from being transferred to the piston 130 and then leaked to an outside of the piston 130. And the piston 130 may be manufactured in a forging manner.

The piston 130 includes a piston body 131 which has an approximately cylindrical shape and is disposed in the cylinder 120, and a flange part 136 which is radially expanded from one side end of the piston body 131 and coupled to the permanent magnet 230.

The inlet 131a is provided at one surface of the piston body 131. The one surface of the piston body 131 may be a surface facing with the discharge valve 170, i.e., a rear surface thereof.

The piston body 131 includes an outer circumferential surface on which a first surface treatment part 310 providing a predetermined layer or film is provided. The first surface treatment part 310 may be provided on the outer circumferential surface of the piston body 131 in a surface treatment manner. By providing the first surface treatment part 310, it is possible to improve abrasion resistance, lubricity and heat resistance of the piston body 131. For example, the first surface treatment part 310 may be a "first coating layer".

For example, the first surface treatment part 310 may be made of one of polytera fluoroethylene (PTFE), diamond like carbon (DLC), a nickel-phosphorus alloy and an anodizing layer.

The flange part 136 includes a plurality of holes 137a and 137b. The plurality of holes 137a and 137b include one or more coupling holes 137a in which a fastening member coupled with the supporter 135 and the connection member 138 is inserted, and one or more through-holes 137b which reduce flow resistance generated around the piston 130.

Meanwhile, the cylinder 120 may be made of an aluminum material (aluminum or an aluminum alloy) which is a non-magnetic material. And a material composition ratio, i.e., a kind and composition of the material in each of the cylinder 120 and the piston 130 may be the same.

Since the cylinder 120 is made of the aluminum material, the flux generated at the motor assembly 200 is prevented from being transferred to the cylinder 120 and then leaked to an outside of the cylinder 120. And the cylinder 120 may be formed by extruded rod processing.

And since the piston 130 and the cylinder 120 are made of the same material (aluminum), the piston 130 and the cylinder 120 have the same thermal expansion coefficient. While the linear compressor 10 is operated, a high temperature environment (100°C) is created in the shell 100. Since the piston 130 and the cylinder 120 have the same thermal expansion coefficient, the piston 130 and the cylinder 120 may be equally thermally deformed.

Finally, since the piston 130 and the cylinder 120 may be thermally deformed in different sizes or directions, the piston 130 may be prevented from being interfered with the cylinder 120, while the piston 130 is reciprocated.

The cylinder 120 has the hollow cylindrical shape, and the piston body 131 may be movably received therein. The cylinder 120 includes an inner circumferential surface opposite to the outer circumferential surface of the piston body 131. A second surface treatment part 320 providing a predetermined layer or film is provided on the inner circumferential surface of the cylinder 120.

The second surface treatment part 320 may be provided by a different surface treatment manner from that of the first surface treatment part 310. By providing the second surface treatment part 320, it is possible to improve abrasion resistance, lubricity and heat resistance of the piston body 131. For example, the second surface treatment part 320 may be a "second coating layer".

For example, the second surface treatment part 320 may be made of one of Teflon (PTFE), diamond like carbon (DLC), a nickel-phosphorus alloy and a anodizing layer.

A certain difference in hardness between the outer circumferential surface of the piston 130 and the inner circumferential surface of the cylinder 120 may be generated. If the difference in hardness therebetween is too small, one of the piston 130 and the cylinder 120 may be stuck to the other one, i.e., the surface thereof may be worn, while the piston 130 is reciprocated in the cylinder 120.

Therefore, in the embodiment, each of the piston 130 having the first surface treatment part 310 and the cylinder 120 having the second surface treatment part 320 has the hardness greater than a predetermined value, and thus the abrasion resistance of the piston 130 and the cylinder 120 is improved.

Hereinafter, a configuration and a surface treatment method of the first surface treatment part 310 or the second surface treatment part 320 will be described.

The first surface treatment part 310 or the second surface treatment part 320 may include polytera fluoroethylene (PTFE). The PTFE is a fluorinate polymer which is referred to as "Teflon".

In a state in which the fluorinate polymer is formed into a paint, the PTFE is sprayed on the outer circumferential surface of the piston 130 or the inner circumferential surface of the cylinder 120, and treated by heating and plastic working at a predetermined temperature, thereby providing an inactive coating layer.

Since the PTFE has a low frictional coefficient, the PTFE is coated on the outer circumferential surface of the piston 130 or the inner circumferential surface of the cylinder 120, the lubricity and the abrasion resistance of the surface may be enhanced.

Meanwhile, the hardness of the PTFE is very small, and may be measured by a measuring method of pencil hardness. For example, the hardness of the PTFE may be more than the pencil hardness of HB. However, when the hardness of the PTFE is converted into Vickers hardness (Hv), the PTFE may have approximately 0 to approximately 30Hv (referring to Table 1).

As another example, the first surface treatment part 310 or the second surface treatment part 320 may include a film prepared by an anodizing technique, i.e., the anodizing layer.

The anodizing technique is a kind of an aluminum painting, in which, when the current is applied in a state in which aluminum is used as an anode, an aluminum surface is oxidized by oxygen generated at the anode, and thus an oxidized aluminum layer is provided.

The anodizing layer has excellent corrosion resistance and electrical breakdown resistance.

The hardness of the anodizing layer may be changed according to a state or a composition of a material (a basic material) to be coated, and may be approximately 300 to approximately 500Hv. (referring to Table 1).

As yet another example, the first surface treatment part 310 or the second surface treatment part 320 may include the diamond-like carbon (DLC).

The LDC is an amorphous carbon-based new material which is a thin film-shaped material prepared by electrically accelerating carbon ions in plasma or activated hydrocarbon molecules and smashing them on the surface.

The DLC has similar physical properties to diamond, and thus has high hardness and abrasion resistance, excellent electrical breakdown resistance, a low frictional coefficient and excellent lubricity.

The hardness of the DLC may be approximately 1,500 to approximately 1,800 (referring to Table 1).

As still another example, the first surface treatment part 310 or the second surface treatment part 320 may include a nickel-phosphorus alloy material.

The nickel-phosphorus alloy material may be provided on the outer circumferential surface of the piston body 131 or the inner circumferential surface of the cylinder 120 by an electroless nickel plating manner, such that nickel and phosphorus are surface-segregated in a uniform thickness. The nickel-phosphorus alloy material may have a chemical composition in which nickel is approximately 90 to approximately 92%, phosphorus is approximately 9 to approximately 10%.

The nickel-phosphorus alloy material improves the corrosion resistance and the abrasion resistance of the surface and also provides excellent lubricity.

The hardness of the nickel-phosphorus alloy material may be approximately 500 to approximately 600Hv. (referring to Table 1).

**[Table 1]**

| Coating material (method) | Hardness (Hv, Vickers hardness) |
|---|---|
| PTFE (Teflon) | 0∼30 (average: 15) |
| Anodizing layer | 300∼500 (average: 400) |
| DLC (Diamond-Like Carbon) | 1,500∼1,800 (average:1,650) |
| Ni-P alloy | 500∼600 (average: 550) |

As described above, the first surface treatment part 310 or the second surface treatment part 320 may be provided by one of the four coating materials (methods).

However, the first surface treatment part 310 and the second surface treatment part 320 are provided by different coating materials (methods) from each other. Therefore, the outer circumferential surface of the piston 130 and the inner circumferential surface of the cylinder 120 have the hardness difference which is more than the predetermined value. For convenience of explanation, a hardness valve of the first surface treatment part 310 is referred to as a "first hardness value", and that of the second surface treatment part 320 is referred to as a "second hardness value".

In the embodiment, the above four materials (methods) may be selected to provide the hardness difference which is more than the predetermined value. Hereinafter, referring to an experimental graph, a change in an abrasion ratio of the cylinder or the piston according to the hardness difference between the first and second surface treatment parts will be described.

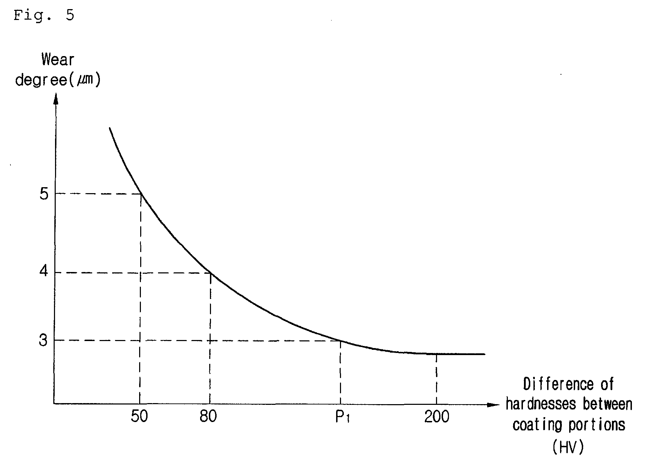

Fig. 5 is a graph illustrating a change in the abrasion ratio of the cylinder or the piston according to the hardness difference between first and second surface treatment parts in accordance with an embodiment.

In Fig. 5, a predetermined surface treatment part is provided on each of the outer circumferential surface of the piston 130 and the inner circumferential surface of the cylinder 120, and the abrasion ratio occurring at the piston or the cylinder according to the hardness difference of each surface treatment part is experimentally measured and organized. Here, the predetermined surface treatment part was prepared by various materials or methods other than the four methods described in Table 1.

While the piston 130 is repeatedly reciprocated in the cylinder 120, it was targeted to maintain the abrasion ratio of the surface of the piston 130 or the cylinder 120 at 3 µm or less in order to prevent damage of the piston 130 and the cylinder 120 and to secure operation reliability.

Referring to Fig. 5, the surface treatment parts were provided so that the hardness difference between the first surface treatment part 310 of the piston 130 and the second surface treatment part 320 of the cylinder 120 was approximately 50Hv, and then, for example, the reciprocation of the piston 130 was performed for 100 hours or more. In this case, the abrasion ratio of the piston 130 or the cylinder 120 was approximately 5 µm.

And when the hardness difference between the first surface treatment part 310 and the second surface treatment part 320 was 80Hv, the abrasion ratio of the piston 130 or the cylinder 120 was approximately 4 µm.

Meanwhile, when the hardness difference between the first surface treatment part 310 and the second surface treatment part 320 was P1, the abrasion ratio of the piston 130 or the cylinder 120 was approximately 3 µm. Here, the P1 is formed around approximately 150Hv. And in a range in which the hardness difference is P1 or more, the abrasion ratio is maintained at 3 µm or less. As the hardness difference is increased, the abrasion ratio may be gradually reduced.

In other words, in order to secure the operation reliability of the piston 130 and the cylinder 120, each surface treatment part may be selected so that the hardness difference between the first surface treatment part 310 of the piston 130 and the second surface treatment part 320 of the cylinder 120 is approximately 150Hv or more.

Hereinafter, referring to Table 2, when one of the four coating materials (methods) is provided on the first surface treatment part 310 of the piston 130 and another one is provided on the second surface treatment part 320 of the cylinder 120, the hardness difference of the piston 130 and the cylinder 120 is described.

**[Table 2]**

| First surface treatment part | Second surface treatment part | Hardness difference (Hv) between surface treatment parts |
|---|---|---|
| PTFE (Teflon) | Anodizing layer | 385 |
| | DLC | 1,635 |
| | Ni-P alloy | 535 |
| Anodizing layer | PTFE | 385 |
| | DLC | 1,250 |
| | Ni-P alloy | 150 |
| DLC (Diamond-Like Carbon) | PTFE | 1,635 |
| | Anodizing layer | 1,250 |
| | Ni-P alloy | 1,100 |
| Ni-P alloy | PTFE | 535 |
| | Anodizing layer | 150 |
| | DLC | 1,100 |

Table 2 shows hardness difference values calculated by using an average hardness value of each coating material.

Specifically, when the anodizing layer is provided at one of the first surface treatment part 310 and the second surface treatment part 320 and the Ni-P alloy is provided at the other one, the hardness difference is approximately 150Hv.

However, when the DLC is provided at one of the first surface treatment part 310 and the second surface treatment part 320 and the PTFE is provided at the other one, the hardness difference is approximately 1,635Hv.

And when the PTFE is provided at one of the first surface treatment part 310 and the second surface treatment part 320 and the anodizing layer is provided at the other one, the hardness difference is approximately 385Hv.

When the PTFE is provided at one of the first surface treatment part 310 and the second surface treatment part 320 and the Ni-P alloy is provided at the other one, the hardness difference is approximately 535Hv.

When the anodizing layer is provided at one of the first surface treatment part 310 and the second surface treatment part 320 and the DLC is provided at the other one, the hardness difference is approximately 1,250Hv.

When the DLC is provided at one of the first surface treatment part 310 and the second surface treatment part 320 and the Ni-P alloy is provided at the other one, the hardness difference is approximately 1,100Hv.

As described above, when the anodizing layer is provided at one of the first surface treatment part 310 and the second surface treatment part 320 and the Ni-P alloy is provided at the other one, the hardness difference value between the piston 130 and the cylinder 120 is approximately minimum 150Hv and approximately maximum 1,635. That is, the hardness difference value may be at least approximately 150Hv or more.

When the first and second surface treatment parts 310 and 320 are prepared using the above-mentioned four coating materials, the hardness difference which is a reference for determining the abrasion resistance may be maintained at approximately 150Hv or more.

In other words, when the surface treatment part is provided on each of the outer circumferential surface of the piston 130 and the inner circumferential surface of the cylinder 120 using the four coating materials, the abrasion resistance of the piston 130 or the cylinder 120 may be maintained at a preferable level. Therefore, during the reciprocation of the piston 130, it is possible to secure the operation reliability of the piston 130 or the cylinder 120.

As an example, when the PTFE is provided at the first surface treatment part 310 of the piston 130 and the anodizing layer is provided at the second surface treatment part 320 of the cylinder 120, the hardness difference between the first and second surface treatment parts 310 and 320 is approximately 385Hv, and thus it is possible to satisfy the required hardness difference value.

Further, for example, the hardness difference between the first and second surface treatment parts 310 and 320 may be approximately 150 to approximately 385Hv, approximately 150 to approximately 535Hv, approximately 150 to approximately 1,100Hv, approximately 150 to approximately 1250Hv, or approximately 150 to approximately 1,635Hv.

And the PTFE coating layer is provided on the piston 130 which is reciprocated, and thus it is possible to improve the lubricity. And the anodizing layer is provided on the cylinder 120, and thus it is possible to improve the corrosion resistance and the electrical breakdown resistance and also it is possible to secure the operation reliability of the piston 130 and the cylinder 120.

According to the embodiments, since the cylinder and the piston is made of the non-magnetic material, particularly the aluminum material, it is possible to prevent the flux generated from the motor assembly from being leaked to the outside of the cylinder, and also it is possible to improve the efficiency of the compressor.

Further, since the surface treatment part is provided at each of the opposite surfaces of the piston and the cylinder, particularly, the outer circumferential surface of the piston and the inner circumferential surface of the cylinder, it is possible to increase the abrasion resistance and thus to improve the reliability of components of the compressor.

Further, since the hardness difference value between the first surface treatment part provided on the outer circumferential surface of the piston and the second surface treatment part provided on the inner circumferential surface of the cylinder is provided within a predetermined range, it is possible to reduce the abrasion ratio of the cylinder or the piston.

Particularly, since the difference value between the hardness of the first surface treatment part and the hardness of the second surface treatment part is maintained at a predetermined value or more, it is possible to prevent the outer circumferential surface of the piston from being stuck to the inner circumferential surface of the cylinder, and thus to prevent the damage of the piston or the cylinder.

Further, since the permanent magnet provided at the motor assembly is made of a ferrite material which is cheap, it is possible to save the manufacturing cost of the compressor.

Although embodiments have been described with reference to a number of illustrative embodiments thereof, it should be understood that numerous other modifications and embodiments can be devised by those skilled in the art that will fall within the scope of the appended claims.

## Claims

1. A linear compressor (10) comprising:
a shell (100) comprising a refrigerant inlet (101);
an outer stator (210) provided in the shell and comprising a coil;
an inner stator (220) disposed to be spaced apart from the outer stator;
a permanent magnet (230) disposed to be movable between the outer stator and the inner stator;
a cylinder (120) comprising a compression space in which a refrigerant sucked through refrigerant inlet is compressed; and
a piston (130) coupled to the permanent magnet to be reciprocated in the cylinder; **characterised by**
a first surface treatment part (310) provided at the piston, the first surface treatment part having a first hardness value; and
a second surface treatment part (320) provided at the cylinder to have a second hardness value so that a difference between the first and second hardness values is 150Hv or more based on Vickers hardness.

2. The linear compressor (10) according to claim 1, wherein the preset value is such that an abrasion amount generated at the piston or the cylinder, after the piston is repeatedly reciprocated for a predetermined period of time, is 3 µm or less.

3. The linear compressor (10) according to claim 1 or 2, wherein the first surface treatment part (310) or the second surface treatment part (320) is made of one of polytetra fluoroethylene (PTFE), diamond like carbon (DLC), an Ni-P alloy and an anodizing layer.

4. The linear compressor (10) according to claim 3, wherein the first surface treatment part (310) is made of one of the PTFE, the DLC, the Ni-P alloy and the anodizing layer, and the second treatment part (320) is made of another of the PTFE, the DLC, the Ni-P alloy and the anodizing layer, which is different from the first surface treatment part.

5. The linear compressor (10) according to claim 3 or 4, wherein the first surface treatment part (310) is made of the PTFE, and the second surface treatment part (320) is made of the anodizing layer.

6. The linear compressor (10) according to any of preceding claims, wherein the piston (130) and the cylinder (120) are made of a non-magnetic material.

7. The linear compressor (10) according to claim 6, wherein the piston (130) and the cylinder (120) are made of aluminum or an aluminum alloy.

8. The linear compressor (10) according to claim 7, wherein the aluminum or the aluminum alloy of the piston (130) and the cylinder (120) is the same material.

9. The linear compressor (10) according to any of preceding claims, wherein the first surface treatment part (310) is provided on an outer circumferential surface of the piston (130), and the second surface treatment part (320) is provided on an inner circumferential surface of the cylinder (120), which is opposite to the outer circumferential surface of the piston.

10. The linear compressor according to any of the preceding claims, wherein the piston (130) comprises:
a piston body (131) received in the cylinder (120); and
a flange part (136) extended in a radial direction of the piston body and coupled to the permanent magnet (230), and
wherein the first surface treatment part (310) is provided on an outer circumferential surface of the piston body (131).

## Patentansprüche

1. Linearer Kompressor (10), der aufweist:
ein Gehäuse (100), das einen Kältemitteleinlass (101) aufweist;
einen äußeren Stator (210), der in dem Gehäuse bereitgestellt ist und eine Spule aufweist;
einen inneren Stator (220), der derart angeordnet ist, dass er von dem äußeren Stator beabstandet ist;
einen Permanentmagneten (230), der derart angeordnet ist, dass er zwischen dem äußeren Stator und dem inneren Stator beweglich ist;
einen Zylinder (120), der einen Kompressionsraum aufweist, in dem ein durch den Kältemitteleinlass eingesaugtes Kältemittel komprimiert wird; und
einen Kolben (130), der mit dem Permanentmagnet gekoppelt ist, um in dem Zylinder hin und her bewegt zu werden, **gekennzeichnet durch**
einen ersten Oberflächenbehandlungsteil (310), der an dem Kolben bereitgestellt ist, wobei der erste Oberflächenbehandlungsteil einen ersten Härtewert hat; und
einen zweiten Oberflächenbehandlungsteil (320), der an dem Zylinder bereitgestellt ist, um einen zweiten Härtewert zu haben, so dass eine Differenz zwischen dem ersten und zweiten Härtewert basierend auf der Vickers-Härte 150 Hv oder mehr ist.

2. Linearer Kompressor (10) nach Anspruch 1, wobei der voreingestellte Wert derart ist, dass eine an dem Kolben oder dem Zylinder erzeugte Abriebmenge, nachdem der Kolben eine vorgegebene Zeitspanne lang wiederholt hin und her bewegt wurde, 3 µm oder weniger ist.

3. Linearer Kompressor (10) nach Anspruch 1 oder 2, wobei der erste Oberflächenbehandlungsteil (310) oder der zweite Oberflächenbehandlungsteil (320) aus Polytetrafluorethylen (PTFE), einer diamantartigem Kohlenstoff (DLC), einer Ni-P-Legierung oder einer Anodisierungsschicht hergestellt ist.

4. Linearer Kompressor (10) nach Anspruch 3, wobei der erste Oberflächenbehandlungsteil (310) aus PTFE, DLC, der Ni-P-Legierung oder der Anodisierungsschicht hergestellt ist, und
der zweite Behandlungsteil (320) aus einem anderen des PTFE, des DLC, der Ni-P-Legierung oder der Anodisierungsschicht hergestellt ist, die verschieden von der ersten Oberflächenbehandlungsschicht ist.

5. Linearer Kompressor (10) nach Anspruch 3 oder 4, wobei der erste Oberflächenbehandlungsteil (310) aus PTFE hergestellt ist und der zweite Oberflächenbehandlungsteil (320) aus der Anodisierungsschicht hergestellt ist.

6. Linearer Kompressor (10) nach einem der vorhergehenden Ansprüche, wobei der Kolben (130) und der Zylinder (120) aus einem nicht magnetischen Material hergestellt sind.

7. Linearer Kompressor (10) nach Anspruch 6, wobei der Kolben (130) und der Zylinder (120) aus Aluminium oder einer Aluminiumlegierung hergestellt sind.

8. Linearer Kompressor (10) nach Anspruch 7, wobei das Aluminium oder die Aluminiumlegierung des Kolbens (130) und des Zylinders (120) das gleiche Material sind.

9. Linearer Kompressor (10) nach einem der vorhergehenden Ansprüche, wobei der erste Oberflächenbehandlungsteil (310) auf einer Außenumfangsoberfläche des Kolbens (130) bereitgestellt ist und der zweite Oberflächenbehandlungsteil (320) auf einer Innenumfangsoberfläche des Zylinders (120) bereitgestellt ist, die gegenüber der Außenumfangsoberfläche des Kolbens ist.

10. Linearer Kompressor nach einem der vorhergehenden Ansprüche, wobei der Kolben (130) aufweist:
einen Kolbenkörper (131), der in dem Zylinder (120) aufgenommen ist; und
einen Flanschteil (136), der sich in einer Radialrichtung des Kolbenkörpers erstreckt und mit dem Permanentmagneten (230) gekoppelt ist, und
wobei der erste Oberflächenbehandlungsteil (310) auf einer Außenumfangsoberfläche des Kolbenkörpers (131) bereitgestellt ist.

## Revendications

1. Compresseur linaire (10) comprenant :
une enveloppe (100) comprenant un orifice d'admission de fluide frigorigène (101) ;
un stator extérieur (210) ménagé dans l'enveloppe et comprenant une bobine ;
un stator intérieur (220) disposé pour être espacé du stator extérieur ;
un aimant permanent (230) disposé pour être mobile entre le stator extérieur et le stator intérieur ;
un cylindre (120) comprenant un espace de compression dans lequel un fluide frigorigène aspiré par l'orifice d'admission de fluide frigorigène est comprimé ; et
un piston (130) couplé à l'aimant permanent pour être animé d'un mouvement de va-et-vient dans le cylindre ; **caractérisé par**
une première partie de traitement de surface (310) ménagée au niveau du piston, la première partie de traitement de surface ayant une première valeur de dureté ; et
une seconde partie de traitement de surface (320) ménagée au niveau du cylindre pour avoir une seconde valeur de dureté de sorte qu'une différence entre les première et seconde valeurs de dureté soit de 150 Hv ou plus d'après la dureté de Vickers.

2. Compresseur linaire (10) selon la revendication 1, dans lequel la valeur préétablie est telle qu'une quantité d'abrasion générée au niveau du piston ou du cylindre, après que le piston est animé de façon répétée d'un mouvement de va-et-vient pendant une période prédéterminée, soit de 3 µm ou moins.

3. Compresseur linaire (10) selon la revendication 1 ou 2, dans lequel la première partie de traitement de surface (310) ou la seconde partie de traitement de surface (320) est constituée de l'un parmi le poly(tétrafluoroéthylène) (PTFE), le carbone sous forme de diamant amorphe (CDA), un alliage Ni-P et une couche d'anodisation.

4. Compresseur linaire (10) selon la revendication 3, dans lequel la première partie de traitement de surface (310) est constituée de l'un parmi le PTFE, le CDA, l'alliage Ni-P et la couche d'anodisation, et la seconde partie de traitement (320) est constituée d'un autre parmi le PTFE, le CDA, l'alliage Ni-P et la couche d'anodisation, qui est différent de la première partie de traitement de surface.

5. Compresseur linaire (10) selon la revendication 3 ou 4, dans lequel la première partie de traitement de surface (310) est constituée du PTFE, et la seconde partie de traitement de surface (320) est constituée de la couche d'anodisation.

6. Compresseur linaire (10) selon l'une quelconque des revendications précédentes, dans lequel le piston (130) et le cylindre (120) sont constitués d'un matériau non magnétique.

7. Compresseur linaire (10) selon la revendication 6, dans lequel le piston (130) et le cylindre (120) sont constitués d'aluminium ou d'un alliage d'aluminium.

8. Compresseur linaire (10) selon la revendication 7, dans lequel l'aluminium ou l'alliage d'aluminium du piston (130) et celui du cylindre (120) sont le même matériau.

9. Compresseur linaire (10) selon l'une quelconque des revendications précédentes, dans lequel la première partie de traitement de surface (310) est ménagée sur une surface circonférentielle extérieure du piston (130), et la seconde partie de traitement de surface (320) est ménagée sur une surface circonférentielle intérieure du cylindre (120), qui est opposée à la surface circonférentielle extérieure du piston.

10. Compresseur linaire selon l'une quelconque des revendications précédentes, dans lequel le piston (130) comprend :
un corps de piston (131) reçu dans le cylindre (120) ; et
une partie de bride (136) s'étendant dans une direction radiale du corps de piston et
couplée à l'aimant permanent (230), et
dans lequel la première partie de traitement de surface (310) est ménagée sur une surface circonférentielle extérieure du corps de piston (131).
